(19) Europäisches Patentamt
European Patent Office
Office européen des brevets

(11) **EP 3 106 040 A1**

(12) **EUROPEAN PATENT APPLICATION**

(43) Date of publication:
**21.12.2016 Bulletin 2016/51**

(51) Int Cl.:
*A23L 13/00* (2016.01)    *A23L 13/40* (2016.01)
*A23K 10/00* (2016.01)    *A23K 10/40* (2016.01)

(21) Application number: **15172194.1**

(22) Date of filing: **15.06.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **OLMOS és TÓTH Mezögazdasági, Kereskedelmi és Szolgáltató Kft 4025 Debrecen (HU)**

(72) Inventor: **The designation of the inventor has not yet been filed**

(74) Representative: **Svingor, Adam Danubia Patent & Law Office LLC POB 198 1368 Budapest (HU)**

Remarks:
If details are not fully discernible, that is due to the quality of the drawings filed by the applicant.

(54) **PORK MEAT PRODUCT OF IMPROVED FATTY ACID COMPOSITION**

(57) The object of the invention is within the area referring to functional food production. More precisely, the invention relates to pork products enriched in n-3 fatty acids, preferably to pork food products and/or fat products. Furthermore, the invention relates to methods for pig tissues enriched in n-3 fatty acids, pork food products, pork products and/or pork fat products.

**Description**

**FIELD OF THE INVENTION**

The object of the invention is in the field of functional food production. More precisely, the invention relates to pork products enriched in n-3 fatty acids, preferably to pork food products and/or fat products. Furthermore, the invention relates to methods for pig tissues enriched in n-3 fatty acids, pork food products, pork products and/or pork fat products.

**BACKGROUND OF THE INVENTION**

The fatty acid composition of lipids present in the foods plays an outstanding role in healthy diet. Products enriched in saturated fatty acids present risk factors for certain heart and circulatory diseases, while certain members of the polyunsaturated fatty acids (PUFA) family may significantly prevent the occurrence of such diseases thus they constitute protecting factors. According clinical study reports, the consumption of PUFAs eases, reduces or completely eliminates the symptoms of different human diseases (coronary heart problems, psoriasis, certain inflammations). These days, there is a growing interest in foods which may contribute to developing a healthy lifestyle. Accordingly, several researchers make efforts to produce foodstuffs which may play a role in pursuing a healthy lifestyle. Functional foods are foods whose nutritional value and biological utilization are enhanced by the artificial transformation and further development of some source foods contained in them, through which, relative to such source foods, functional foods have verifiably improved health impacts. The present invention focuses on the production of such product type. In pigs the fatty acid composition of certain food ingredients can be modified by admixture of oilseeds, vegetable oils or fats of animal origin to animal feeds.

The effect of increased n-3 fatty acid content on organoleptic qualities and the shelf life of the meat have been studied in a few places worldwide. The results obtained in relation with linseed and linseed oil supplements are controversial, in Italy the change in the taste and smell of meat was reported, although other research teams did not experience similar phenomena when studying Parma ham. According to Hungarian experiments involving Hungahib pigs, the feed enriched with linseed did not exert significant effects on the meat of ham or on the colour of its intramuscular fat. During feeding linseed oil, the assessment of the odour of meat products became worse, however, the use of tocopherol supplementation resulted in a very favourable evaluation. Organoleptic assessment of spiced food products was not negatively affected by linseed supplementation in spite of a significant 13-16 fold increase in $\alpha$-linoleic acid, ALA content. Furthermore, the n-6:n-3 PUFA-ratio changed favourably, meaning it decreased from 13:1 to 1-2:1. On the basis of other Hungarian research results, due to linseed supplementation, in Big White or Landrace crossbred pigs, relative to the total amount of fatty acids, it became possible for the ALA content of fat and muscle tissues to be almost doubled. In the meat and fat from pigs raised on rapeseed oil-supplemented diet a significant increase in docosahexaenic acid (DHA) was observed, which serves as an evidence for the body's capacity to synthesize it, provided the source substance of production - ALA for n-3 fatty acids - is available in sufficient amounts.

The effect of PUFA levels on gene expression was first observed in the liver and considered specific for this organ but subsequent research showed that such effect was also observed in other tissues (e.g. fat tissues, some cells of the immune system, the brain, pancreas).

The topicality of the issue is further reinforced by the fact that regarding the necessary amount of fat and meat cuts increasingly in demand, different countries take different approaches.

Chinese researchers, in their studies investigated the expression of genes playing a part in lipid metabolism in different periods of varying lengths in pigs fed with fodder supplemented with linseed [control without linseed, 90, 60, 30 days (day 170th) before slaughter]. Significant variations (P <0,05) were observed in the fom groups formed in relation to intramuscular fat content ("Intramuscular Fat"; IMF) which increased in proportion to the length of the feeding linseed period. Experience proves that no significant increase in IMF (intramuscular fat) can be achieved if the linseed content of the fodder is below 5% and the feeding period is shorter than 60 days.

Chinese publication No. CN101731473A reveals that pigs were fed on fodder having a linseed content of very high, 5-12 parts by mass.

Chinese publication No. CN103125769A shows that pigs were fed on fodder of very high DHA and EPA content, preferably with 8,51 n-6/n-3 PUFA parts by mass of oily feedstuff.

However, no approach is known, which has allowed a very favourable, i.e. n-6/n-3 PUFA proportion by mass to be reached by the use of feedstuffs with a relatively low linseed content.

The meat from the Mangalitsa and Mangalitsa x Duroc F1 pigs is known to be extremely tasty. Flavouring agents and aromatic substances are fat-soluble. In these pigs the intramuscular fat content is well-distributed, furthermore, relative to other breeds, the amount of intramuscular fat is high and also the fat is bigger in thickness. The Mangalitsa was originally produced for the purpose of developing a lard-type breed, so this is the reason why, relative to other breeds (particularly, different hybrids), differences may appear in fat metabolism, which is an issue that has not been investigated as yet. Foodstuffs produced from meat originating from pigs remain in demand, which is particularly true of products derived from the Mangalitsa or Mangalitsa hybrids.

The objective of the invention is to enhance the production of functional foods prepared from high-quality pig meat and to develop the corresponding feeding procedure as well as the feed itself.

**BRIEF DESCRIPTION OF THE INVENTION**

The invention relates to pork food products in which the ratio of n-6/n-3 fatty acids, particularly their mass ratio is lower than 20, preferably lower than 15. Preferably, the pork product of the invention is

- mainly a meat pork product, in which the ratio of n-6/n-3 fatty acids is lower than 15, preferably lower than 14, 13 or 12, or
- mainly a fat pork product, preferably hard fat, in which the ratio of n-6/n-3 fatty acids is lower than 11, preferably lower than 10, 9 or 8.

Preferably, n-3 polyunsaturated fatty acid content (n-3 PUFA content) of the pork product is at least 500 mg, preferably at least 600 mg or 700 mg per 100 g of pork food product.

Preferably, the pork product is mainly meat pork product, e.g. loin, leg, shoulder, etc., or a pork product prepared by the processing of such parts, from among which it is the muscle that represents the biggest part, preferably, more than 50%.

A preferred pork product is mainly a fat pork product, in which the n-3 polyunsaturated fatty acid content (n-3 PUFA content) is at least 1500 mg, preferably at least 1800 mg or 2000 mg per 100 g of pork food product.

Preferred fat pork products are hard fat (salo, speck, fatback), bacon, fatty ham, etc.

Highly preferably, the n-3-PUFA content in the pork product of the invention is at least 70%, preferably at least 80% or at least 90% alpha-linoleic acid, or wherein the n-3-PUFA is alpha-linoleic acid.

In a highly preferred embodiment, the invention relates to a pork food product in which

the ratio of n-6/n-3 fatty acids is lower than 12, highly preferably lower than 9 or 8, and

the n-3 polyunsaturated fatty acid content (n-3 PUFA content) of the pork product is at least 500 mg, preferably at least 700 mg per 100 g of pork food product, and

the n-3-PUFA content is alfa-linolenic acid in at least 70%, preferably in at least 90%.

According to a preferred embodiment, the pork product is mainly a meat pork product.

According to a preferred embodiment, the pork product is mainly a fat pork product.

According to a preferred embodiment, the pork product is hard fat, bacon or fatty ham.

In a further highly preferred embodiment, the invention relates to a pork food product in which

the ratio of n-6/n-3 fatty acids is lower than 12, highly preferably lower than 9 or 8, and

the n-3 polyunsaturated fatty acid content (n-3 PUFA content) of the pork product is at least 500 mg, preferably at least 700 mg per 100 g of pork food product, and

the n-3-PUFA content is alfa-linolenic acid in at least 70%, preferably in at least 90%, and

the pig is a Mangalitsa breed or Mangalitsa hybrid, preferably a Mangalitsa x Duroc hybrid.

Highly preferably, the pork product is mainly fat pork product, in which the n-3 polyunsaturated fatty acid content (n-3 PUFA content) is at least 1500 mg, preferably at least 1800 mg or 2000 mg per 100 g of pork food product.

Preferably, the pork product of the invention is prepared from the meat of Mangalitsa breed or Mangalitsa hybrid breed. Preferably, the n-3 PUFA content increased in meat from pigs fed with linseed compared to n-3 PUFA content measured in pigs from the same breed but fed with feed not containing linseed.

Highly preferably, the amount and/or distribution of intramuscular fat in the pig meat changed compared to those pigs which were fed with feed not containing linseed.

Highly preferably, the invention relates to functional food products containing pork food products specified above or set forth herein. Furthermore, the invention relates to a method for producing the pork food product of the invention, wherein the method comprises the feeding of pigs with feeds comprising 0.5-10 mass%, preferably 0.5-5 mass% or 1-5 mass%, more preferably 1-4.2 mass% or 1-3 mass%, highly preferably 1.5-2.5 mass% or approximately 2 mass% linseed.

Preferably, the pig is a fat-type pig.

Preferably, the pig is a Mangalitsa breed or Mangalitsa hybrid, preferably, a Mangalitsa x Duroc hybrid.

Preferably, the Mangalitsa is a Blonde, Red or Swallow-bellied breed, highly preferably it is of Blonde type.

Highly preferably, the pig carries a genetic marker characteristic for Mangalitsa - such as microsatellite marker or preferably SNP pattern - which can be identified from the pork food product.

Preferably, the procedure implies feeding the animal with the feedstuff determined herein, starting from the Xth day of the animal's life up to reaching its slaughter weight, preferably over 14060 days, where X stands for the day starting from which the animal is fed on feedstuffs different from mother's milk or from formulae substituting mother's milk. Furthermore, the invention relates to the use of pig feed containing 0.5-10 mass%, preferably 0.5-5 mass% or 1-5 mass%, more preferably 1-4.2 mass% or 1-3 mass%, highly preferably 1.5-2.5 mass% or approximately 2 mass% linseed for use in the production of pork food product containing an increased amount of n-3 fatty acids.

Preferably, the pig feed used in the method of the invention contains at least as follows:

| Name | Highly preferably (%) | more preferably (%) |
|------|----------------------|---------------------|
| Composition, mass% | | |
| Wheat or wheat middings | 10-70 | 30-50 |
| Barley or barley middings | 10-50 | 20-40 |
| Maize or maize middings | 0-40 | 10-30 |
| Extra sunflower seed meal | 0-15 | 0-5 |
| Molasses | 0-5 | 0-3 |
| **Linseed** | **0.5-5** | **1.5-2.5** |
| Limestone meal | 0-3 | 0.5-2 |
| Salt | 0-2 | 0.1-0.8 |
| Monocalcium phosphate | 0-3 | 0-1 |

Preferably, the feedstuff for pigs is used for the production of the pork food product of the invention.

Preferably, the invention relates to the use of pig feed in the method of the invention.

Furthermore, the invention relates to the use of pig feed containing 0.5-10 mass%, preferably 0.5-5 mass% or 1-5 mass%, more preferably 1-4.2 mass% or 1-3 mass%, highly preferably 1.5-2.5 mass% or approximately 2 mass% linseed in the production of pork food product containing an increased amount of n-3 fatty acids.

The invention relates to pigs fed according to the inventional method.

Furthermore, the invention relates to pork products derived from pigs fed according to the method of the invention.

## DEFINITIONS

The term "pork product" includes products made of meat of muscle origin and those made of animal fat as well as products containing these, including products containing both meat of muscle origin and animal fat. Accordingly, pork products are products obtained as a result of processing the pig, such as hind leg, loin, hard fat, etc. Furthermore, pork products are products prepared by processing the aforementioned parts (processed pork product), e.g. partially or completely, i.e. products smoked, fried, cooked, fermented and dried in varying degrees, and products prepared by the combination of these.

In the "meat pork product" of the invention, from among the ingredients of which it is the muscle that is present in the highest ratio, preferably more than 40%, 50% or 60% by weight of the product.

In the "fat pork product" of the invention, from among the ingredients of which it is animal fat (pig fat) that is present in the highest ratio, preferably more than 40%, 50% or 60% by weight of the product.

By "ratio" preferably "mass ratio" is meant.

## BRIEF DESCRIPTION OF THE FIGURES

Figure 1:     Change (%) in the ratio of saturated fatty acids in rearing pigs fed with linseed-containing feedstuff and in the control Mangalitsa x Duroc F1 pigs

Figure 2:     Change (%) in the ratio of monousaturated fatty acids in rearing pigs fed with linseed-containing feedstuff and in the control Mangalitsa x Duroc F 1 pigs

Figure 3:     Amount of (%) polyunsaturated fatty acids in rearing pigs fed with linseed-containing feedstuff and in the control Mangalitsa x Duroc F 1 pigs

Figure 4:     Change (%) in the ratio of alfa-linolenic acid in rearing pigs fed with linseed-containing feedstuff and in the control Mangalitsa x Duroc F 1 pigs

Figure 5: The ratio of n-6 and n-3 fatty acids in rearing pigs fed with linseed-containing feedstuff and in the control Mangalitsa x Duroc F 1 pigs

Figure 6: Change (%) in the ratio of saturated fatty acids in pigs fed with linseed-containing feedstuff and in the control Mangalitsa pigs

Figure 7: The ratio (%) of monosaturated fatty acids in pigs fed with linseed containing feedstuff and in the control Mangalitsa pigs

Figure 8: Amount of (%) polyunsaturated fatty acids in pigs fed with linseed containing feedstuff and in the control Mangalitsa pigs

Figure 9: Change (%) in the ratio of alfa-linolenic acid in pigs fed with linseed containing feedstuff and in the control Mangalitsa pigs during the fattening experiment

Figure 10: The ratio of n-6 and n-3 fatty acids in in pigs fed with linseed containing feedstuff and in the control Mangalitsa pigs

Figure 11: Electronic nose study - the result of principal component analysis

Figure 12: Electronic nose study - the result of discriminant function analysis

Figure 13: Electronic tongue study - the result of principal component analysis

Figure 14: Electronic tongue study - the result of discriminant function analysis

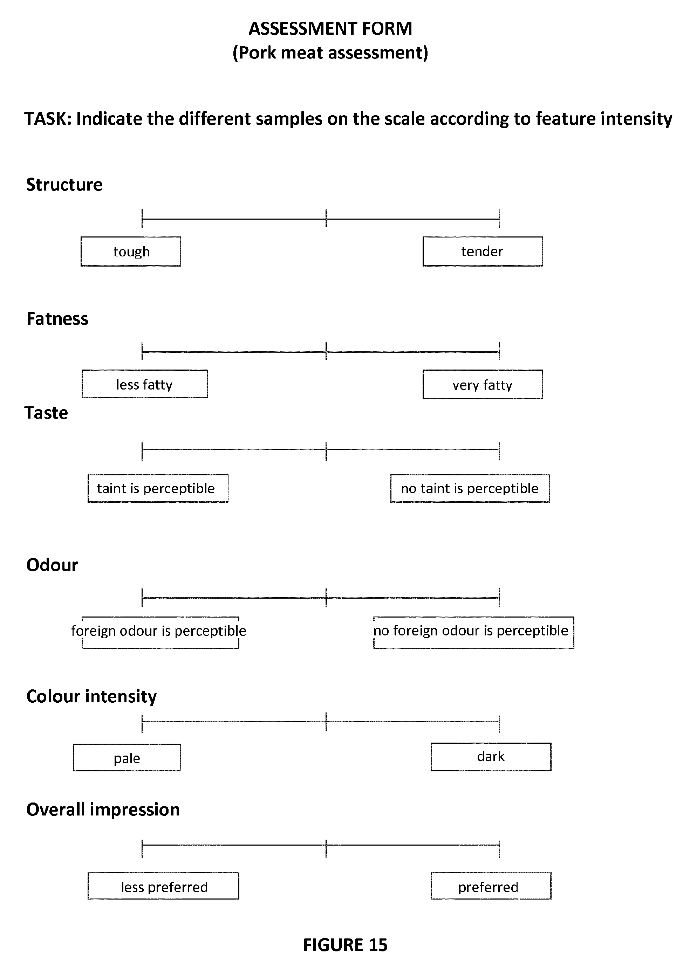

Figure 15: Assessment form for assessing pork meat A

## DETAILED DESCRIPTION OF THE INVENTION

Mangalitsa pigs involved in the study are measured at arrivals and at the time of transport by using the devices which are also used for measuring the incoming amounts of feed.

After veterinary inspection, the individual pigs were measured and selected.

The animals were introduced to the Applicant's premises and on this occasion the measurement of individual animals and the collection of their data were performed. The specific origin of animals, their unique ear tag numbers, their weight, gender and genetics were all recorded.

The uptake of feed by the animals was measured on a daily basis and individual weight measuring was performed every week. Each fodder ration was sampled for the purpose of carrying out subsequent investigations. Fodder rations were provided with separate identifying marks and stored separately away from each other. The animals were checked every hour and any behaviour different from normal, possible diseases, deaths etc. were documented on a daily basis. Observations were made on the behaviour of the animals as well as on their external features, the colour and shininess of their hair and the differences in the development of their body shape were all documented. The consumption of the fodder kept for experimental purposes was also checked on a daily basis. With the aid of the two feed-carriage systems it was possible to feed the pigs (with control fodder and with fodder supplemented with linseed) separately from each other in both lots, in altogether four pens.

It is necessary to investigate the expression of the genes involved in the lipid metabolism of the Mangalitsa and the Mangalitsa x Duroc F1 breeds in the initial phase of rearing piglets, at the beginning and half way on in the fattening stage and at the time of slaughter. More particularly, in addition to the molecular genetic processing of samples, the documentation of origin and gender, data on daily weight gain, the instrumental measurement of back-fat thickness at two points and that of data related to meat production: ham, loin, mass of white tissue, carcass weight, intramuscular fat content, dripping loss, it is necessary to perform the calorimetric examination of meat by using a Miniscan device. By the statistical processing of the results obtained by the inventors, an adequate correlation can be revealed between the lipid metabolism examined and the effect of genes regulating protein incorporation.

The innovation work in product development is facilitated by molecular genetic investigations, as a result of which, from a human nutritional point of view, higher quality and healthier carcass meat or meat products can be placed on the table. It is unexpected that, for a basically fat-type pig, a minor change in the feed can give rise to such a favourable effect. Molecular genetic investigations help reveal the key regulatory processes in lipid metabolism. As a result of a long-term consumption of Mangalitsa loin enriched in n-3 fatty acids, the incidences of cardiovascular diseases, some cancerous diseases and diseases of the central nervous system are expected to decrease.

A marked change was found in the percentage of n-3 fatty acids and in the ratio of n-6/n-3 fatty acids, which are considered important from the point of view of human health. During the use of feed mixtures containing linseed, these parameters showed a positive change. In both genotypes, due to feeding linseeds, the $\alpha$-linoleic acid content in the loin and hard fat became significantly increased and the ratio of n-6/n-3 fatty acids became the narrowest of all. This change indicates that the fatty acidic composition of the valuable tissues in slaughter pigs can be efficiently influenced by a 2% dosage of linseed supplementation. This all was achieved in a way that no negative discrepancies were found either in meat quality parameters or in the individual elements of organoleptic tests. During the organoleptic tests of loin chops, the assessors did not find any significant differences with regard to taste, odour or appearance. The relatively high amount of n-3 fatty acids did not have any negative effects on the stability of lipids, which would in turn deteriorate the quality and the storage life of the meat since the malondialdehyde values were the same as those in the control group.

According to the inventors' results, both in the pig's tissues consumed as food, preferably in its meat and adipose tissues, and preferably in the loin and hard fat samples, a fatty acid composition having a favourable effect on the physiology of human nutrition can be achieved by using 0.5-5%, preferably 1-3% and particularly preferably 2% dosage of linseed supplement in the feed. The consumption of 100 g of the ham derived from pigs fattened with linseed supplementation may cover 50% of the necessary daily intake of n-3 PUFA, consequently pig meat can greatly contribute to increasing the PUFA content of human diet.

EXAMPLES

**Example 1 PRODUCTION PANEL**

**Task 1: Chemical evaluation of feedstuffs fed and the analysis of the fatty acid composition of feedstuffs**

**Material and methods**

**Chemical composition**

After the receipt of the samples, they were ground to a particle size of maximum 1 mm and stored in a refrigerator at +4°C until determined.

The following determinations were conducted:

Water content was determined as set forth in standard MSZ ISO 6469:2001. The sample was dried in a dryer cabinet (adjusted to 105°C) to weight equilibrium, the loss of mass on drying constitutes the water content of the sample.

Raw protein content was determined according to the Kjeldahl method as set forth in standard MSZ 6830-4:1981. The sample was treated with concentrated sulfuric acid in the presence of copper sulfate, and the nitrogen content was converted to ammonium salt. The ammonia was released by the addition of sodium hydroxide, distilled into boric acid and the nitrogen content was measured by titration and the result thus obtained served as a basis for calculating the raw protein content.

Raw fiber content was determined according to method XII., Suppl. 10 of Decree 44/2003 (IV.26.) of the Ministry of Agriculture and Rural Development (FVM). The sample was treated with hot diluted sulfuric acid then with potassium hydroxide solution. After being washed and dried, the residue was incinerated to weight equilibrium at a temperature of 550°C. Raw fiber content was calculated from the incineration loss.

The crude ash content was determined as set forth in standard MSZ ISO 5984:1992. The sample was incinerated to weight equilibrium. The loss of weight resulting from ashing corresponds to the crude ash content of the sample.

**Method for Fatty Acid Analysis**

Lipids were extracted from the samples by using the method of Folch et al. (1957). Methyl esters of fatty acids present in the lipids were formed by the use of the boron trifluoride method (AOAC, 1990). Fatty acid methylesters were analyzed in a Shimadzu gas chromatograph (type 2010, Shimadzu Corporation, Tokyo, Japan) equipped with a FID detector. Samples were separated on a SP-2380 capillary column (30 m x 0.25 mm, 025-um film thickness; Supelco, Inc. Bellefonte, PA).

Gas chromatography conditions were as follows: injector 270°C, detector 300°C, column 80°C for 0 min, then heating up to 205°C in a ratio of 2.5°C/min, 5 min at 205°C, then to 250°C in a ratio of 10°C/min, and 5 min at 250°C.

Results were expressed in the ratio of peak areas in percentages. The peaks of fatty acid methylesters in the sample were identified on the basis of the retention time of fatty acids present in a standard with known composition (Mixture Me 100, Larodan Fine Chemicals AB, Sweden).

**Results and their Evaluation**

The composition and calculated nutrient content of fattening feeds used in the study are summarized in Table 1.

Raw fat content was determined by means of Soxhlet extraction, according to method XI 11, Suppl. 10 of Decree 44/2003 (IV.26.) of the Ministry of Agriculture and Rural Development. The sample was extracted with hexane. Prior to the extraction, feeds were hydrolyzed with 4 M hydrochloric acid.

**Table 1**

| Composition and calculated nutrient content of fattening feeds | | |
|---|---|---|
| Name | Control | Experimental |
| **Composition, %** | | |
| Wheat middings | 25.0 | 25.0 |
| Barley | 24.4 | 24.5 |
| Corn | 21.0 | 20.0 |
| Wheat | 15.0 | 16.0 |
| Extra sunflower seed meal | 10.0 | 3.0 |
| Molasses | 2.0 | 2.0 |
| Linseed | - | 2.0 |
| Limestone meal | 0.95 | 0.85 |
| Salt | 0.45 | 0.45 |
| Monocalcium phosphate | 0.40 | 0.40 |
| L-Lysine HCl (98%) | 0.3 | 0.3 |
| Premix | 0.5 | 0.5 |
| **Calculated Nutrient Content** | | |
| Dry material, g/kg | 871 | 872 |
| NEs, MJ/kg | 9.19 | 9.33 |
| Raw protein, g/kg | 136 | 134 |
| Raw fat, g/kg | 25 | 31 |
| Raw fibres, g/kg | 44 | 42 |
| Lysine, g/kg | 7.0 | 6.9 |
| Mtehionine + Cystine, g/kg | 5.1 | 5.0 |
| Methionine, g/kg | 2.4 | 2.4 |
| Ca, g/kg | 6.7 | 6.3 |
| P, g/kg | 5.0 | 5.0 |
| Na, g/kg | 2.0 | 2.0 |
| Vitamin A, IU/kg | 8280 | 8280 |
| Vitamin D, IU/kg | 2047 | 2047 |
| Vitamin E ($\alpha$-tocopherol), mg/kg | 42 | 42 |
| Vitamin K, mg/kg | 2 | 2 |

As has been shown in the table above, the experimental feed contained 2% linseed. Due to its linseed oil content, this fodder has a relatively high energy- and raw fat content. However, this does not represent a difference that would significantly influence the feed intake of pigs.

The chemical composition of control and experimental feeds was regularly checked. The results obtained from the tests are shown in Table 2.

**Table 2**

| Fattening feed | Dry material | Raw protein | Raw fat | Raw fibres | Raw ash | Raw protein | Raw-fat | Raw-fibres | Raw-ash |
|---|---|---|---|---|---|---|---|---|---|
| | g/kg | | g/kg of original material | | | g/kg of dry material | | | |
| Control | 951 | 148 | 34 | 53 | 55 | 156 | 36 | 56 | 58 |
| Control | 950 | 148 | 35 | 52 | 56 | 156 | 37 | 55 | 59 |
| Control | 946 | 150 | 35 | 51 | 54 | 159 | 37 | 54 | 57 |
| Control | 952 | 146 | 33 | 50 | 52 | 153 | 35 | 52 | 54 |
| Control | 949 | 146 | 36 | 52 | 55 | 153 | 38 | 55 | 58 |
| Control | 952 | 179 | 38 | 43 | 57 | 188 | 40 | 45 | 60 |
| Control | 948 | 147 | 35 | 38 | 47 | 155 | 36 | 40 | 49 |
| With linseed | 947 | 149 | 45 | 46 | 51 | 157 | 48 | 48 | 54 |
| Control | 949 | 167 | 36 | 47 | 52 | 176 | 38 | 49 | 55 |
| Control | 950 | 151 | 38 | 46 | 57 | 159 | 40 | 49 | 60 |
| Control | 951 | 154 | 35 | 46 | 50 | 162 | 37 | 48 | 52 |
| With linseed | 946 | 147 | 43 | 50 | 48 | 156 | 45 | 53 | 51 |
| Control | 948 | 153 | 36 | 52 | 54 | 161 | 38 | 55 | 57 |
| With linseed | 946 | 149 | 40 | 62 | 53 | 157 | 42 | 66 | 56 |
| With linseed | 945 | 142 | 42 | 66 | 57 | 150 | 44 | 70 | 60 |
| With linseed | 948 | 169 | 43 | 69 | 54 | 178 | 45 | 72 | 57 |

According to the results obtained from the analyses, the quantitative values of main nutrients comply with the calculated results, or in several cases, they in fact exceed them, so the raw protein content of the feeds is by 10-20 g higher than the calculated values. Regarding raw fat and also raw fiber, similar discrepancies were found. These discrepancies may be attributed to the relatively high dry matter content of the samples. In the calculation of the chemical composition of feeds, a 87% dry matter content was taken into account. In the feeds investigated a higher, 95% dry matter content was measured which resulted in the higher concentration of nutrients. However, the measured values of the nutritional parameters of the feeds completely confirm the fact of an appropriate and homogenous feed mixing. The results of analytical studies meet with the expected nutritional values necessary for fattening pigs.

The main objective of the feeding experiment was to modify the fatty acid content of the individual food ingredients (meat, hard fat) in a way that it meets human dietary requirements. Therefore, the analytical investigations had an outstanding role in placing the focus on the examination of the fatty acid composition of feedstuffs, since this is how the inventors managed to justify the modified fatty acid profile of feed.

Results of the experiments are summarized in Table 3.

**Table 3**

| Fatty acid content of the control and the experimental feed, % | | |
|---|---|---|
| **Fatty acid** | **Control feed** | **Feed with linseed** |
| C10:0 (capric acid) | 0.02±0.01 | 0.02±0.01 |
| C12:0 (lauric acid) | 0.04±0.01 | 0.03±0.02 |
| C14:0 (myristic acid ) | 0.30±0.06 | 0.19±0.08 |
| C15:0 (pentadecanoic acid) | 0.10±0.01 | 0.03±0.01 |
| C18:0 (palmitic acid) | 14.42±0.93 | 11.43±0.52 |
| C16:1 (palmitoleic acid) | 0.51±0.09 | 0.31±0.13 |

(continued)

| Fatty acid content of the control and the experimental feed, % | | |
| --- | --- | --- |
| Fatty acid | Control feed | Feed with linseed |
| C17:0 (heptadecanoic acid) | 0.18±0.03 | 0.14±0.03 |
| C18:0 (stearic acid) | 3.33±0.40 | 2.79±0.56 |
| C18:1n-9c (oleic acid) | 23.14±0.91 | 21.80±1.16 |
| C18:2n-6c (linoleic acid) | 54.17±1.22 | 49.59±1.90 |
| C18:3n-3 ($\alpha$-linoleic acid) | 2.59+0.29 | 12.62±1.09 |
| C20:0 (arachidic acid) | 0.32±0.01 | 0.29±0.02 |
| C20:1n-9 (eicosenoic acid) | 0.51±0.03 | 0.39±0.04 |
| C20:2n-6 (eicosadienoic acid) | 0.09±0.02 | 0.07±0.02 |
| C22:0 (behenic acid) | 0.30±0.03 | 0.23±0.05 |

Due to the use of linseed in the experimental feed, the ratio of $\alpha$-linoleic acid increased by almost five times. Thus, analyses have clearly demonstrated that the admixture of linseed with the feed has been adequately performed. As compared with other fatty acids, the percentage of palmitic acid and linoleic acid decreased, which can be attributed to the quantities of feed components used in the feed. The decrease in linoleic acid ratio may considered favourable in the human nutritional-physiological point of view since the ratios of n-6 and n-3 fatty acids contained in the feed was reduced. It is likely to be reflected in the fatty acid composition of meat and hard fat samples.

**Task 2: Determination of fattening parameters by using 50 pigs by each genotype**

**Material and methods**

The fattening experiment was performed by the inventors on a livestock with a number of animals several times higher than the number of those indicated in task (50-50).
In the experiment involving Mangalitsa x Duroc F1 fattening pigs, the control and the experimental feed containing linseed were fed in 4 phases.
In the experiment a total number of 776 F1 fattening pigs were fed with control feed, while 776 F1 fattening pigs received feed supplemented with linseed.
Broken down by phase, the number of fattening pigs fed was as follows:

Period 1, 185 control,    196 experimental animals
Period 2, 181 control,    194 experimental animals
Period 3, 198 control,    200 experimental animals
Period 4, 212 control,    186 experimental animals

Linseed was also fed with 24-24 Mangalitsa pigs. Animals were weighed monthly and the feed was also back-tested. Based on the data, the inventors calculated the weight gain, feed intake and specific feed utilization.

**Results and their Evaluation**

Data summarizing the results of the specific phases are shown in Table 4.

Table 4

| Overall results of bio-indicators measured and calculated during fattening (mean deviation) | | | |
| --- | --- | --- | --- |
| | Control | Linseed | P |
| F1 pigs | | | |
| Weight gain, g | 527±95 | 544±91 | =0.404 |

(continued)

| Overall results of bio-indicators measured and calculated during fattening (mean deviation) | | | |
|---|---|---|---|
| | **Control** | **Linseed** | **P** |
| **F1 pigs** | | | |
| Feed intake, kg | 2.80±0.61 | 2.77±0.45 | =0.774 |
| Specific feed utilization, kg/kg | 5.31±1.33 | 5.08±1.14 | =0.431 |
| **Pure breed Mangalitsa** | | | |
| Weight gain, g | 428±69 | 429±60 | =0.973 |
| Feed intake, kg | 2.53±0.54 | 2.46±0.49 | =0.769 |
| Specific feed utilization, kg/kg | 5.90±1.44 | 5.73±1.43 | =0.813 |

During fattening no significant differences were found in any of the bio-indicators. Feeding experimental feedstuff did not influence the weight gain of F1 or pure breed Mangalitsa pigs. However, there is significant discrepancy between the two genotypes. Weight gain and feed intake of pure breed Mangalitsa pigs are lower, consequently, specific feed utilization is also lower.

**Task 3 Slaughtering of animals at the end of fattening, sampling**

In the fatting experiment, samples were collected three times. In the specific determinations the number of samples analyzed was different and it was by far higher than the contractually agreed number of animals, i.e. 10-10.
Number of samples studied:

| | |
|---|---|
| chemical composition of meat | 120 animals |
| fatty acid composition of meat | 120 animals |
| fatty acid composition of hard fat | 120 animals |
| cholesterol content of meat | 40 animals |
| lipid peroxidation of meat | 40 animals |
| quality and organoleptic examination of meat | 40 animals |

**Example 2**

**ANALYTICAL PANEL**

**Task 1: Nutritional and biological value of the loin and back-fat**

Four main parameters were studied in the analysis:

- the chemical composition of loin samples
- the effect of feeding linseed on the fatty acid composition of the meat and on hard fat, with special regard to the ratio of linolenic acid and that of the n-6/n-3 fatty acid
- cholesterole content of the loin samples
- the change in malondialdehzde content, which indicates lipid peroxidation, after the storage of meat samples for 1 or 6 months

**Materials and methods**

Chemical composition (dry material, ash and fat) of the meat samples and the ratio of certain long-chain fatty acids were determined as has been described above in the Production panel of the report.
To determine the cholesterol content of loin samples, 10 ml 60% potassium hydroxide solution and 40 ml methanol were added to 10 g of ground, homogenized meat. After the completion of saponification, the content of the test-tube was filtered, then the test-tube and the filter were purged three times with 15 ml of hexane and subsequently, the organic phase was poured into a separating funnel and extracted. The organic phase was dried on sodium sulphate then vacuum-concentrated at 80°C. The residue was washed into a 10 ml volumetric flask with hexane, the mixture was homogenized and a sample of this was injected to the gas chromatograph. Cholesterol was analyzed in a Shimadzu gas chromatograph (Shimadzu Corporation, Tokyo, Japan) equipped with a CP-Sil 5 CB (10 m x 0,25 mm) column. Gas chromatography conditions:

Detector: FID 300°C
Injector: splitter 270°C
Carrier gas: helium, 30 kPa
Column: 270°C

For determining malondialdehyde (MDA) content, the meat samples were homogenized in distilled water (ratio 1:9). The MDA determination is based on the measurement principle that in acidic medium and at high temperature the MDA forms a yellowish-red complex with 2-thiobarbituric acid. The complex has an absorption maximum at 535 nm, thus it can be detected with a spectrophotometer. The PH of the system was adjusted by the use of 10% trichloroacetic acid. During the reaction time (20 min),the sample was incubated in a water bath. After centrifugation, the absorbance of the samples was measured at 535 nm against reagent blind. In measurements 1,1,3,3-tetra-ethoxi-propane was used as standard.

**Results and their Evaluation**

**Chemical composition of meat samples**

In the experiment the dry material-, fat- and ash content of pig loin samples was analyzed. Table 5 below shows the the specific dates of slaughtering and the average results of the two groups.

**Table 5**

| Test results concerning the chemical composition of loin samples | | | | | |
|---|---|---|---|---|---|
| Group | Dry material | Raw fat | Raw ash | Raw fat | Raw ash |
| | | g/kg of original material | | g/kg of dry material | |
| **Slaughter 1** | | | | | |
| Control F1 | 5±13 | 48±3 | 13±0 | 163±41 | -3±12 |
| Linseed F1 | 65±8 | 47±2 | 12±0 | 152±31 | -0±9 |
| **Slaughter 2** | | | | | |
| Control F1 | 90±20 | 56±24 | 11±1 | 188±67 | 9±4 |
| Linseed F1 | 92±15 | 57±18 | 11±0 | 194±54 | 8±3 |
| Pure breed Mangalitsa, control | 15±24 | 94±30 | 11±1 | 293±75 | 4±4 |
| Pure breed Mangalitsa, linseed | 08±25 | 84±29 | 11±1 | 268±75 | 5±4 |
| **Slaughter 3** | | | | | |
| Control F1 | 90±15 | 59±19 | 11±1 | 200±55 | 9±4 |
| Linseed F1 | 84±11 | 54±15 | 11±0 | 190±44 | 9±2 |

According to the statistical analysis of the results feeding linseed caused no significant difference. The dry material-, fat- and ash content gave similar results However, the analysis of genotypic data also revealed that, irrespective of the different types of feeds, the dry material and fat content of loins in pure breed Mangalitsa pigs were relatively high.

**Fatty acid composition of loin and hard fat samples**

Fatty acid profiles of 120 loin and hard fat samples were analyzed and studied for each genotype.

**The effect of feeding linseed on the fatty acid composition of loin and hard fat samples collected from fattening Mangalitsa x Duroc F1 pigs**

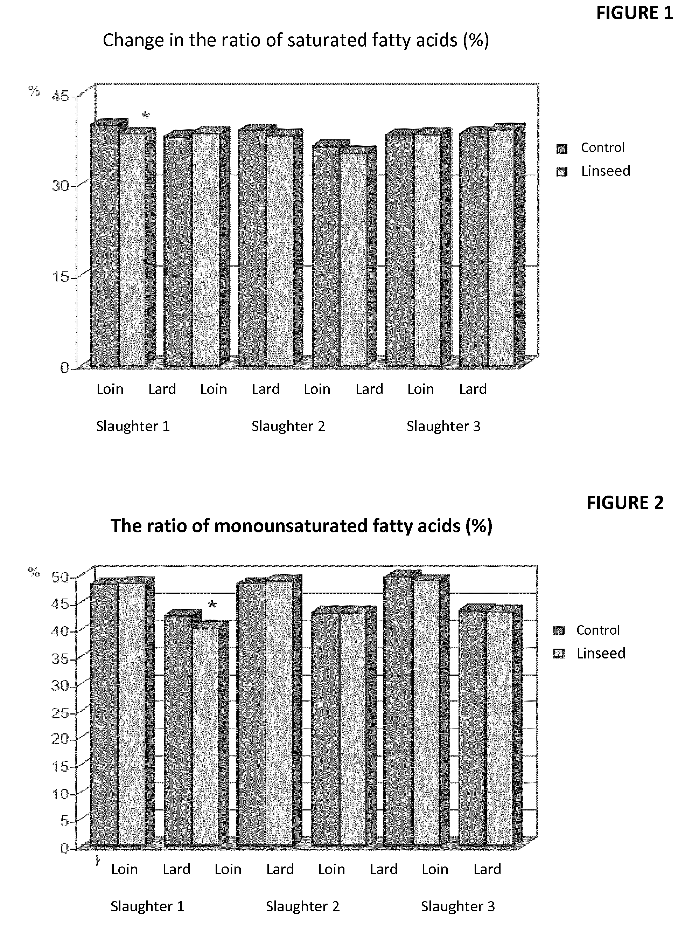

Concerning the ratio of saturated fatty acids, a significantly lower value was measured only in the loin samples derived from pigs fed with linseed (Figure 1). At all other times, the saturated fatty acid composition of loin and hard fat was the same in the groups studied.

Similarly, the ratio of monounsaturated fatty acids was found to vary in samples collected at the 1st slaughter but in this case the lower value was measured in the hard fat samples (Figure 2). None of the other samples showed major differences between the groups, i.e. feeding linseed did not have a decisive impact on the ratio of monounsaturated fatty acids.

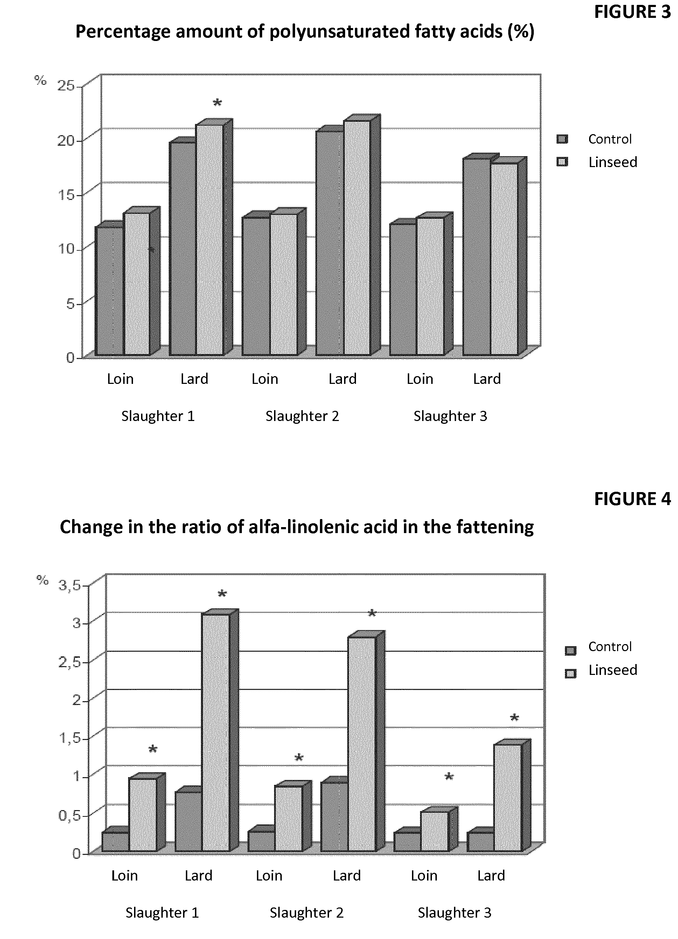

Linseed supplementation affected the polyunsaturated fatty acid composition of loin and hard fat samples collected from fattening Mangalitsa x Duroc F1 pigs only on one occasion. The polyunsaturated fatty acid content of hard fat samples from the 1st slaughter was significantly higher, meaning that it increased from 19.55% to 21.18% (Figure 3).

Evaluating the effect of feeding linseed, the inventors found the most significant change in the ration of $\alpha$-linoleic acid (Figure 4). The $\alpha$-linoleic acid present in linseeds also appeared in loin- and hard fat samples, and significantly higher values were measured in every sampling interval. However, in loin samples the level of increase was lower than in the hard fat sample. In light of the differences in the lipid compositions of muscle and fat tissues, this discrepancy should not come as a surprise. From among the lipid fractions of tissues, fatty acids are incorporated into triglycerides with the highest efficiency. Since hard fat, as a fat tissue, primarily contains triglycerides, the higher amount of $\alpha$-linoleic acid absorbed from the intestine forms esters with glycerol, which allows for a higher-efficiency incorporation.

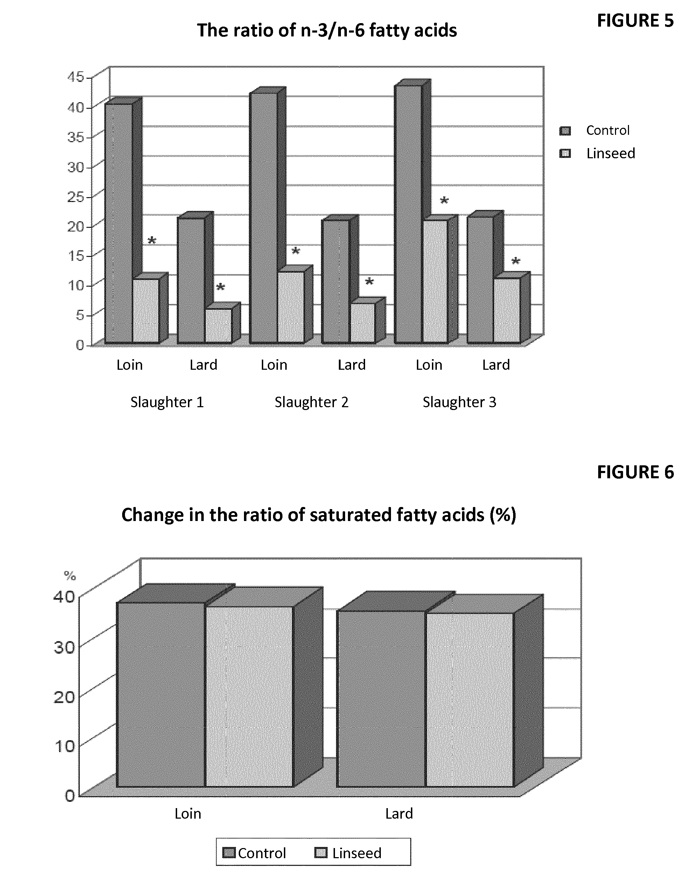

The significant increase in the ratio of $\alpha$-linoleic acid had a beneficial effect on the ratio of n-6/n-3 fatty acids considered to be highly important important from the point of view of human nutritional physiology. Due to the increase in $\alpha$-linoleic acid, as a percentage of n-3 fatty acid, a significantly lower ratio of n-6/n-3 was found in the loin and hard fat samples (Figure 5).

**The effect of feeding linseed on the fatty acid composition of loin and on hard fat samples collected from pure breed fattening Mangalitsa pigs**

In the fatty acid composition of samples taken from pure breed Mangalitsa pigs the addition of linseed caused differences similar to those found in F1 fattening pigs.

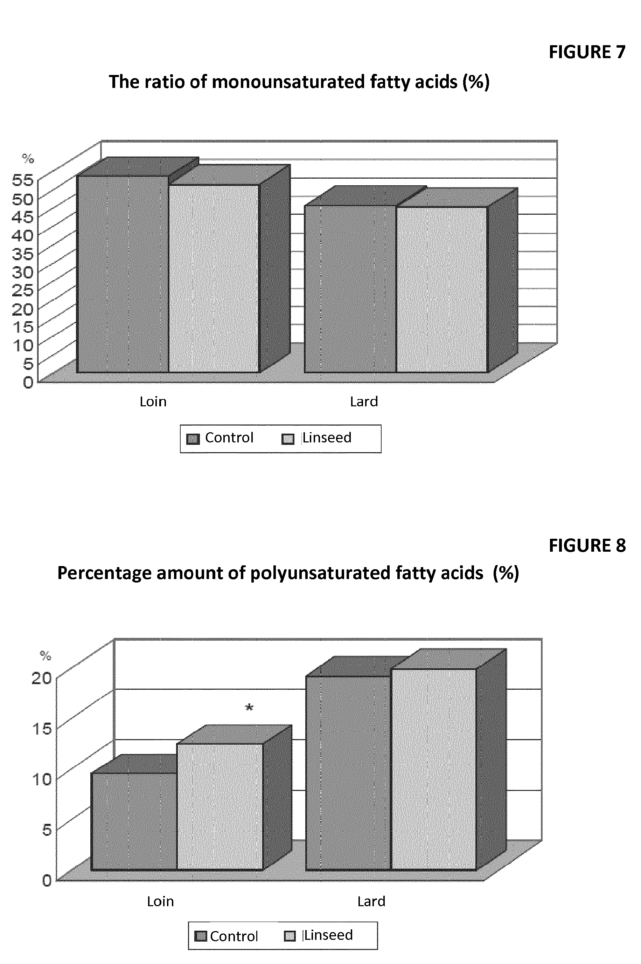

Figures 6 and 7 demonstrate that the amounts of saturated and polyunsaturated fatty acids were almost the same in the control and experimental groups, i.e. the 2% linseed content of feed did not significantly alter the ratio of fatty acids. Regarding the absolute values, the two genotypes are different from each other. Independently of the different fatty acid composition of the feed, the loin and hard fat derived from pure breed Mangalitsa pigs have a higher level of monounsaturated fatty acid content. The ratios of monounsaturated fatty acid in loin samples are 53.41 and 51.28% in Mangalitsa pigs while in the F1 fattening pigs these values are 48.4 and 48.86%.

In loin samples from pure breed Mangalitsa pigs, the ratio of polyunsaturated fatty acids was significantly higher due to feeding linseed (Figure 8). In hard fat no changes were found in the ratio of this fatty acid group.

By looking at the change in the ratio of $\alpha$-linolenic acid considered to be of utmost importance in feeding linseed, it becomes obvious that a significantly higher ratio was measured in loin and hard fat samples.

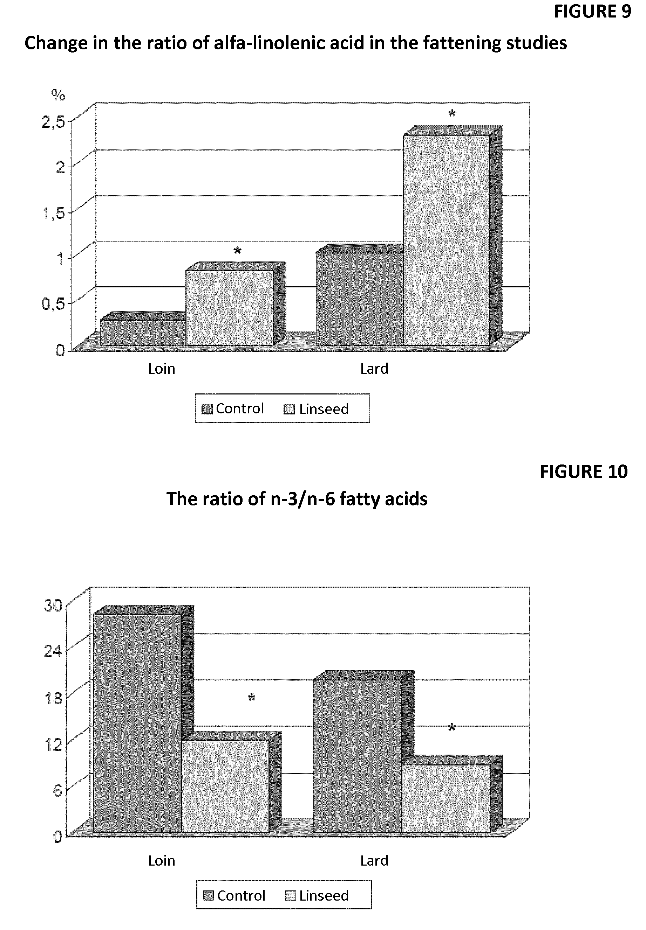

The addition of linseed made the ratio of $\alpha$-linoleic acid content of loin samples increase from 0.28% to 0.82% and from 1.01% to 2.3% in the samples of in hard fat. Due to the increase in $\alpha$-linoleic acid content, the ratio of n-6/n-3 fatty acids significantly decreased as a result of feeding linseed (Figure 10); from 28.22 to 11.9 in loin samples and from 19.81 to 8.82 in hard fat samples.

**Cholesterol content of the loin samples**

The cholesterol content of meat samples was also measured. The mean values of data collected from the two groups are shown in Table 6.

**Table 6**

| Levels of cholesterol content in loin samples (average±standard deviation) | | |
|---|---|---|
| | Control | Linseed |
| Cholesterol, mg/100 g of loin | 50.4±3.0 | 51.2±2.7 |

It becomes obvious from the above that the values in the control and experimental groups were almost the same, i.e. this parameter was not affected by the addition of linseed.

The change in the malondialdehyde content as a marker of lipid peroxidation in meat samples

The linseed content of the feed did not modify the lipidperoxidation parameter of meat samples. The data demonstrated in Table 7 show that similar values were measured in the two groups after storage of 1 month and 6 months.

**Table 7**

| The effect of frozen-chilled storage of different durations on malondialdehyde content of loin samples (average± deviation) | | |
|---|---|---|
| | Control | Linseed |
| **F1 pigs** | | |
| storage for 1 month | 0.05±0.02 | 0.05±0.02 |
| storage for 6 months | 0.03±0.01 | 0.02±0.01 |
| | | |
| storage for 1 month | 0.05±0.03 | 0.05±0.02 |
| storage for 6 months | 0.03±0.01 | 0.03±0.02 |

**Task 2: Meat quality parameters**

Major cut: Longissimus dorsi muscle *(m. longissiumus dorsi)*,
Parameters studied:, pH, meat colour, dripping loss, heat treatment loss, thawing loss, structure, aroma flavour characteristics (electronic nose, electronic tongue, human panel test)

**Materials and methods**

**Dripping loss**

Dripping loss was determined according to the Honikel method (1987). The meat chops with a thickness of 1 cm (weighing 15.9 $\pm$ 3.17 g), suspended on a wire (pierced at its narrower edge) and closed in plastic pouches were stored for 24 hours at 4-5°C in such way that the samples avoid contact with the sides of the plastic pouches, then the slices were wiped dry and back-tested.

*Dripping loss % = weight prior storage - weight post storage / weight prior storage x 100*

**Cooking loss**

Measured (111.6 $\pm$ 10.94 g) samples were heat treated at 75°C for 2 hours in sealed double-walled plastic pouches. Heat treatment was performed by using a JULABO heater-mixer equipment (TYP/model: ED, AC: 190-235V/5DHz 9A (230V)). After heat treatment, the loss was collected into sealable plastic tubes for further E-tongue analyses and stored at 65°C in an ultra-low temperature freezer. Samples were bac-ktested after a period of 24-hour cooling.

*Cooking loss % = weight prior to heat treatment - post heat treatment weight / weight prior to heat treatment  x*

*100*

**Thawing loss**

The weighed samples (25.04±5.60 g) were stored in a freezer at -2LTC for 14 days. After being frozen, the samples were thawed at 4-5°C for 24 hours in a refrigerator then the slices were wiped dry and back-tested.

*Thawing loss % = weight prior to freezing - weight after thawing / weight prior to freezing x 100*

**pH measurement**

The pH of samples received was measured by using a Testo 205 portable pH meter. The meat was cut with a sharp knife where the measurement taken, subsequently the electrode was inserted into the meat then the value thus given was read on the pH meter. The pH was determined in the dripping loss samples.

**Colour measurement**

The colour of meat was determined by the use of a MINOLTA CHROMA METER CR-300 device. The measurement is based on the so-called CIELAB colour system (Geneve and Juillet, 1924). In the system the colour points are plotted in the L* a* b* spatial Cartesian coordinate system. On the a* b* plane, a* and b* semi-axes mean the following colours: +a* stands for red, a* for green, +b* for yellow, and -b* stands for blue. L* constitutes the brightness factor which is interpreted as beiing perpendicular to plane b*. The light source (D65) was placed on the fresh cross section of the sample parallel with muscle fibers.

**Structure analysis**

Measurements were performed by using Zwick Roell/Z005 structure testing equipment on the aforementioned "cooking loss" samples. Three cylindrical cores parallel with the longitudinal orientation of muscle fibers were cut by means of a cork borer with an internal diameter of 15 mm. In the evaluation, the results of the 3 measurements were averaged. For the purpose of describing the structural features, a pair of classical Warner - Bratzler scissors was used (reverse V-shaped (60° angle) cutting blade, blade thickness of 1 mm). In each case the crosshead speed was 500 mm/minute. By first approximation, the first highest force ([N]) occurring when the head probe moves downward and the force/mm$^2$ value ([N/mm$^2$]) at the end of the measurement were calculated. Normally, this latter parameter, the shear force, provides the basis for comparing the structural features of samples.

**Orsanoteptic evaluation (human panel test)**

The samples were subjected to a 2-hour heat treatment at 75°C in a preparatory room complying with Hungarian Standard (MSZ7304/2-77). Subsequently to heat treatment, samples were evaluated by 10 lay assessors within the framework of a collective evaluation. Each assessor evaluated one sample per group on the basis of a questionnaire drawn up by the inventors (see below).

(The questionnaire is shown in Figure 8.)

In addition to inquiries regarding colour, odour and flavour, the inventors also formulated a question relating to consumers preferences (overall impression). The assessors differentiated the characteristics on a so-called unstructured scale 1-9.

**Electronic nose measurements**

Electronic nose (EN) measurements were performed by means of an Alpha MOS αFox 4000 e-nose (Alpha MOS; Toulouse, France) device. The EN device has three main units: an automatic sample handler (AutoSampler) which performs sampling (this device is capable of handling 64 samples in a single run), an electronic unit (Fox Analyzer) comprising the sensors (18 cross-selective, metal oxide-MOS-sensors) and their signals are loaded to the third unit, a computer running the control software (AlphaSoft 12.3). During the test, the device measures the change of resistance caused by a specific sample in each sensor , then gives the relative change of resistance which is the quotient of the deviation form baseline resistance and the baseline resistance (ΔR/R0).
In the procedure of sample preparation 1 g of each sample was placed into a 20-ml sample bottle and kept in a freezer at a temperature below -20 C until analysed. Prior to measurement, samples were thawed in a refrigerator at 4°C , and were continuously stored in refrigerator during the time of the measurement. From the control and treated samples derived from different animals, the inventors set up a randomized order within 4 repetitions. During the measurement, to avoid changes occurring at ambient temperature, the meat samples put in sample bottles closed with silicon septa were continuously placed on the automatic sample handling unit.

**Adjustments used during the EN measurement of meat samples:**

| air flow [ml/min] | 150 |
|---|---|
| amount studied (g) | 1 |
| injected volume (ul/s) | 3000 |
| injection ratio (ul/s) | 500 |
| heating time (s) | 180 |
| sample temperature (°C) | 60 |
| temperature of sampler (°C) | 70 |
| time of data recording (s) | 120 |
| cleaning time (s) | 1030 |
| (u = micro) | |

**Electronic tongue measurements**

Measurements were performed by means of an Alpha MOS αAstree device capable of measuring solubilized samples. The device comprises seven cross-selective CHEMFET (chemically modified field effect transistors) electrodes, an Ag/AgCl reference electrode and a stirrer. In the process of the measurement the difference of potential between a sensor and the reference electrode is recorded as baseline data.

After the measurement of cooking loss, the meat juice stored frozen was thawed in a refrigerator and solutions of a 20-fold dilution were prepared from the liquid of the specific meat samples which were subsequently filtered on filter papers. Subsequently, in a random order, the solutions were put in 25-ml sample holder vials which then were placed in the automatic sampler. Each sample solution was followed by a cleaning solution (Millipore pure water). The signal recording time for a sample solution was 120 s and it was 15 s for a cleaning solution. The speed of the stirrer in the sample solution was 1/s and it was 5/s during cleaning. The measurements were performed in 9 repetitions. Signal intensities measured by the sensors were recorded by means of an AlphaSoft 12.3 software.

**Data evaluation**

Data were organized and recorded by using the Microsoft Excel software package, statistical evaluations were performed with the SPSS 20.0 for Windows software package. The deviations of group averages were assessed by using a paired T test. In tests performed with the aid of electronic sensors, the data obtained were analyzed by means of an AlphaSoft 12.3 control assessment software used for the control of devices. The inventors used principal component analysis (PAC) for describing the basic pattern presented by the data. To examine whether the samples belonging to the specific feeds can be identified on the basis of sensor readings, the inventors ran a discriminant factor analysis (DFA) which they tested by total cross -validation. In the presentation of the two methods, the inventors disclosed the discrimination index values as well as the validation values.

**Results and their Evaluation**

Table 8 shows the general meat quality parameters of the sample population studied.

**Table 8**

| The results of conventional meat quality test (average±deviation) | | | |
|---|---|---|---|
| Treatment | Control | Linseed | P |
| pH24 | 5.60±0.15 | 5.60±0.12 | =0.902 |
| pH48 | 5.61±0.15 | 5.60±0.10 | =0.784 |
| L | 45.20±3.48 | 44.90±2.44 | =0.757 |

(continued)

| The results of conventional meat quality test (average±deviation) | | | |
|---|---|---|---|
| Treatment | Control | Linseed | P |
| a* | 9.82±1.35 | 9.42±0.96 | =0.294 |
| b* | 2.48±0.69 | 2.26±0.63 | =0.297 |
| Dripping loss, % | 3.22±1.39 | 2.27±1.43 | =0.040 |
| Cooking loss, % | 23.91±2.34 | 28.38±3.06 | =0.569 |
| Thawing loss, % | 8.24±2.07 | 8.22±2.27 | =0.972 |
| 1st Fmax, N* | 87.55±17.42 | 91.47±19.26 | =0.503 |
| Shear force, N/mm$^2$ | 0.49±0.10 | 0.52±0.10 | =0.412 |
| *the first highest power occurring when the test head moves downward | | | |

The pH24 and pH48 values were both around pH 5.6, which corresponds to the normal pH range. The almost identical values characteristic for the time of the two measurements indicate that the post mortem ageing processes of the meat had already taken place before the sample arrived. No significant differences in treatments were found for L. a* and b* values characteristic for the colour of the meat. Dripping loss, which is characteristic for water holding capacity, surprisingly, showed significant difference between the two groups with a value by 0.95% higher measured in the control group. Cooking losses were almost the same for the two groups. Shear force values, which are most indicative of meat tenderness, were found to be slightly higher in the linseed feeding group, however, there appeared to be no statistical justification to the difference.

**Organoteptic evaluation (human panel test)**

Average evaluation results for the attributes under investigation are summarized in Table 9.

## Table 9

| Results of the human panel test | | | | | | | | | | | | |
|---|---|---|---|---|---|---|---|---|---|---|---|---|
| Sample | Structure | | Fatness | | Flavour | | Odour | | Colour intensity | | Overall impression | |
| | average | deviation | average | deviation | average | deviation | mean | deviation | average | deviation | average | deviation |
| Control | 170 | ±0.68 | 122 | ±0.33 | 7.85 | ±1.38 | 7.92 | ±1.15 | 2.43 | ±0.91 | 6.07 | ±1.56 |
| Linseed | 2.54 | ±0.32 | 146 | ±0.01 | 3.11 | ±0.06 | 7.46 | ±0.45 | 3.64* | ±0.62 | 5.46 | ±0.09 |

Regarding the majority of features, the assessors were not able to separate the two groups. Evaluation scores were almost the same for fatness, flavour and odour. Statistically (p< 0,05) verifiable differences were only found for colour intensity. The colour of the linseed group was significantly darker compared with the control group. In this respect, it is worth mentioning that the heat treatment applied has a significant impact on the colour intensity of samples, furthermore, each of the measured intensities is characteristic for pale meats.

Electronic nose examination

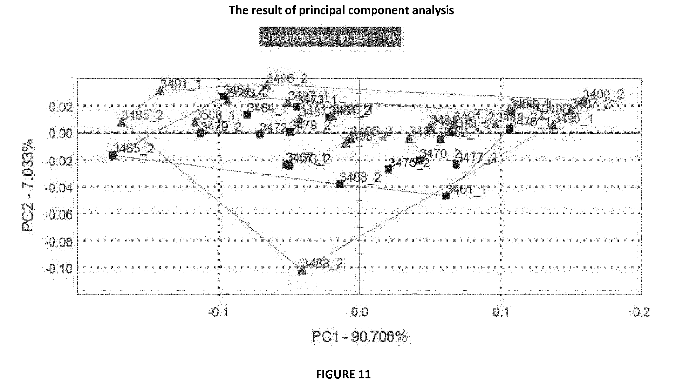

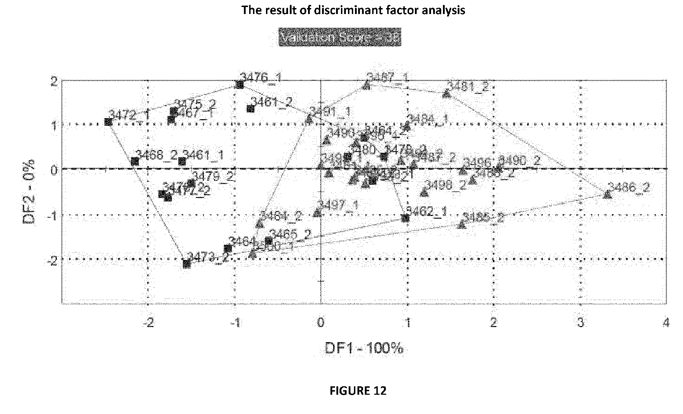

In sensory measurements odour profiles of samples associated with the two treatments were analyzed by using Principal Component Analysis (Figure 11) and discriminant factor analysis (Figure 12). The inventors were not able to make a distinction between the two groups by either method (where blue stands for the control group and red for the group on feed with added linseed).

Electronic tongue examination

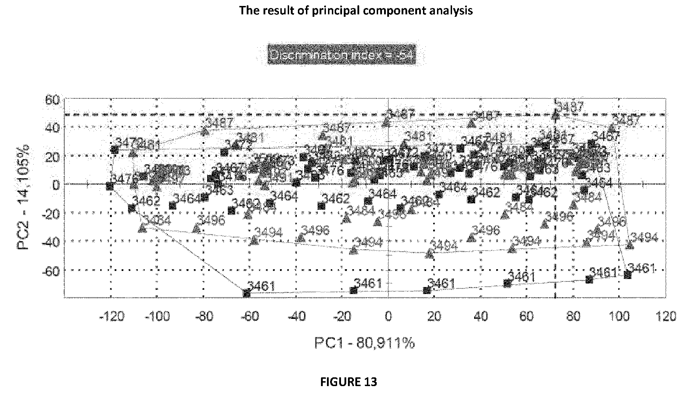

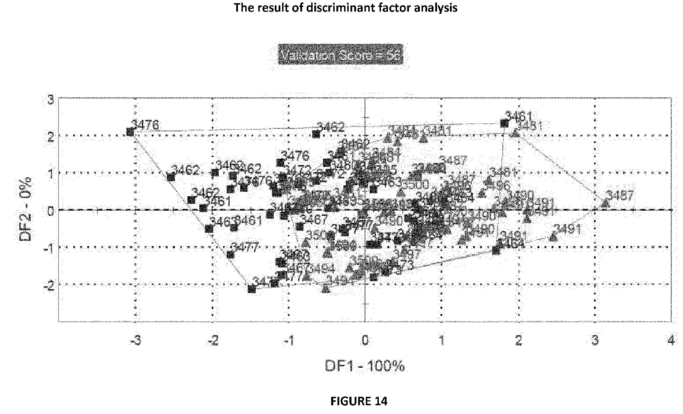

In sensory measurements flavour profiles of samples associated with the two treatments were analyzed by using Principal Component Analysis (Figure 13) and Discriminant factor analysis (Figure 14). The inventors were not able to make a distinction between the two groups by either method (where blue stands for the control group and red for the group on feed with added linseed).

The fact that the results of sensory measurements did not indicate differences between the two treatment indicates that the more advantageous fatty acid composition did not result in distinct differences regarding the features of taste and odour.

By summarizing the results obtained from organoleptic and electronic sensory investigations, it can be concluded that none of the measured characteristics of control or linseed samples differ significantly from each other.

**SUMMARY OF RESULTS**

In the implementation of the invention the inventors conducted research in two areas.

    1. Production panel - Performing experiment in the field of animal nutrition (fattening) for testing the effects of feed with higher linoleic acid content on Mangalitsa pigs of different genotypes.

    2. Analytical panel - The effect of a higher n-3 fatty acid intake on the nutritional and biological value of the animal products as well as on meat quality parameters.

In an experiment performed with the involvement of Mangalitsa x Duroc F1 fattening pigs, the control and the experimental feeds containing 2% linseed were fed in 4 phases. In the experiment a total number of 776 F1 fattening pigs were fed with control feed, while 776 F1 fattening pigs received feed supplemented with linseed. Linseed was also fed with 24-24 Mangalitsa pigs.

Animals were weighed monthly and the feed was also backtested. Based on the data, the inventors calculated the weight gain, feed intake and specific feed utilization. During fattening no significant differences were found in any of the bio-indicators. Feeding experimental feedstuff did not influence the weight gain of F1 or pure breed Mangalitsa pigs. The use of feedstuff containing 2% of linseed resulted in the nutritive content (dry material, fat and ash content) and cholesterol content of loin samples having almost the same values as those of the relevant content found of the control group. A marked change was found in the percentage of n-3 fatty acids and in the ratio of n-6/n-3 fatty acids, which are considered important from the point of view of human health. During the use of feed mixtures containing linseed, these parameters showed a positive change. In both genotypes, due to feeding linseeds, the $\alpha$-linoleic acid content in the loin and hard fat became significantly increased and the ratio of n-6/n-3 fatty acids became the narrowest of all. This change indicates that the fatty acidic composition of the valuable tissues in slaughter pigs can be efficiently influenced by a 2% dosage of linseed supplementation. It is important to emphasize that no negative differences were found in the meat quality parameters or in any of the elements of the organoleptic evaluation. During the organoleptic tests of loin chops, the assessors did not find any significant differences with regard to taste, odour or appearance. The relatively high amount of n-3 fatty acids did not have any negative effects on the stability of lipids, which would in turn deteriorate the quality and the storage life of the meat since the malondialdehyde values were the same as those in the control group.

According to the inventors' results, both in the pig's tissues consumed as food, preferably in its meat and adipose tissues, and preferably in the loin and hard fat samples, a fatty acid composition having a favourable effect on the physiology of human nutrition can be achieved by using just a minor supplementation of 2% linseed in the feedstuffs.

**Claims**

1. A pork food product, wherein the ratio of n-6/n-3 fatty acids is lower than 20, preferably lower than 15.

2. The pork product of claim 1, which is

   - in its major part a meat pork product, in which the ratio of n-6/n-3 fatty acids is lower than 15, preferably lower than 14, 13 or 12, or
   - in its major part a fat pork product, preferably hard fat, in which the ratio of n-6/n-3 fatty acids is lower than 11, preferably lower than 10, 9 or 8.

3. The pork product of claim 1 or 2, where the ratio of n-6/n-3 fatty acids is lower than 12, highly preferably lower than 9 or 8, and
   the n-3 polyunsaturated fatty acid content (n-3 PUFA content) of the pork product is at least 500 mg, preferably at least 700 mg per 100 g of pork food product, and
   the n-3-PUFA content is alfa-linolenic acid in at least 70%.

4. The pork product of any of claims 1-3, in which the n-3 polyunsaturated fatty acid content (n-3 PUFA content) is at least 500 mg, preferably at least 600 mg or 700 mg per 100 g of pork food product, preferably, which is mainly a meat product derived from fat-type pigs, preferably hard fat having an n-3 polyunsaturated fatty acid content (n-3 PUFA content) of at least 1500 mg, preferably at least 1800 mg or 2000 mg per 100 g of pork food product.

5. The pork product of claim 3 or 4, in which, the n-3-PUFA content is at least 70%, or at least 80% or where the n-3-PUFA is alpha-linoleic acid.

6. The pork product of any of claims 1-5, which is derived from fat-type pigs, preferably the n-3 PUFA content increased in meat from pigs of similar breed which are fed with linseed, compared to n-3 PUFA content measured in pigs from the same breed but fed with feedstuffs not containing linseed.

7. The pork product of any of claims 1-6, which was made of Mangalitsa pigs or Mangalitsa hybrid pigs, preferably the n-3 PUFA content increased in meat from pigs fed with linseed, compared to n-3 PUFA content measured in pigs from the same breed but fed with feedstuff not containing linseed.

8. A method for producing pork food product of claims 1-7, **characterized by** that the method implies the feeding of pigs with feeds comprising 0.5-10 mass%, preferably 0.5-5 mass% or 1-5 mass%, more preferably 1-4.2 mass% or 1-3 mass%, highly preferably 1.5-2.5 mass% or approximately 2 mass% linseed.

9. The method of claim 8, where the pig is a fatty pig.

10. The method of claims 8 or 9, where the pig is a Mangalitsa breed or Mangalitsa hybrid, preferably a Mangalitsa x Duroc hybrid.

11. The method of any of claims 8-10, **characterized by** that it implies the feeding of the animal with the feed of claim 3 from Day "X" of the animal life up to the animal's reaching the slaughter weight, preferably through 14-60 days, where "X" indicates the day from which the animal receives feedstuff different from mother's milk or piglet formula.

12. The use of pig feed containing 0.5-10 mass%, preferably 0.5-5 mass% or 1-5 mass%, more preferably 1-4.2 mass% or 1-3 mass%, highly preferably 1.5-2.5 mass% or approximately 2 mass% linseed in the production of pork food product containing an increased amount of n-3 fatty acids.

13. The use of claim 12 for the production of pork food product of claims 1-7 or in the method according to claims 8-11.

14. Pig feed containing 0.5-10 mass%, preferably 0.5-5 mass% or 1-5 mass%, more preferably 1-4.2 mass% or 1-3 mass%, highly preferably 1.5-2.5 mass% or approximately 2 mass% linseed for use in the production of pork food product containing an increased amount of n-3 fatty acids.

FIGURE 1

## Change in the ratio of saturated fatty acids (%)

FIGURE 2

## The ratio of monounsaturated fatty acids (%)

FIGURE 3

## Percentage amount of polyunsaturated fatty acids (%)

FIGURE 4

## Change in the ratio of alfa-linolenic acid in the fattening

**FIGURE 5**

## The ratio of n-3/n-6 fatty acids

**FIGURE 6**

## Change in the ratio of saturated fatty acids (%)

**FIGURE 7**

## The ratio of monounsaturated fatty acids (%)

**FIGURE 8**

## Percentage amount of polyunsaturated fatty acids (%)

**FIGURE 9**

## Change in the ratio of alfa-linolenic acid in the fattening studies

**FIGURE 10**

## The ratio of n-3/n-6 fatty acids

The result of principal component analysis

FIGURE 11

The result of discriminant factor analysis

FIGURE 12

**The result of principal component analysis**

FIGURE 13

The result of discriminant factor analysis

FIGURE 14

# ASSESSMENT FORM
## (Pork meat assessment)

**TASK: Indicate the different samples on the scale according to feature intensity**

**Structure**

| tough | | tender |

**Fatness**

| less fatty | | very fatty |

**Taste**

| taint is perceptible | | no taint is perceptible |

**Odour**

| foreign odour is perceptible | | no foreign odour is perceptible |

**Colour intensity**

| pale | | dark |

**Overall impression**

| less preferred | | preferred |

**FIGURE 15**

Europäisches
Patentamt

European
Patent Office

Office européen
des brevets

# EUROPEAN SEARCH REPORT

**Application Number**

EP 15 17 2194

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUILLEVIC M ET AL: "Effect of a linseed diet on lipid composition, lipid peroxidation and consumer evaluation of French fresh and cooked pork meats", MEAT SCIENCE, ELSEVIER SCIENCE, GB, vol. 81, no. 4, 1 April 2009 (2009-04-01), pages 612-618, XP025874491, ISSN: 0309-1740, DOI: 10.1016/J.MEATSCI.2008.10.019 [retrieved on 2008-10-26] * pages 613-616; tables 1, 4 and 5 * | 1-14 | INV. A23L13/00 A23L13/40 A23K10/00 A23K10/40 |
| X | DATABASE BIOSIS [Online] BIOSCIENCES INFORMATION SERVICE, PHILADELPHIA, PA, US; 2011, SAMPELS S ET AL: "Fatty Acid Transfer From Sow to Piglet Differs for Different Polyunsaturated Fatty Acids (PUFA)", XP002754338, Database accession no. PREV201100237911 * abstract * | 1-14 | |
| | | | TECHNICAL FIELDS SEARCHED (IPC) |
| X | DATABASE BIOSIS [Online] BIOSCIENCES INFORMATION SERVICE, PHILADELPHIA, PA, US; June 2000 (2000-06), ENSER M ET AL: "Feeding linseed to increase the n-3 PUFA of pork: Fatty acid composition of muscle, adipose tissue, liver and sausages", XP002754339, Database accession no. PREV200000156363 * abstract * | 1-14 | A23L A23K |

-/--

The present search report has been drawn up for all claims

| Place of search | Date of completion of the search | Examiner |
|---|---|---|
| Munich | 16 February 2016 | Georgopoulos, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 15 17 2194

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE BIOSIS [Online] BIOSCIENCES INFORMATION SERVICE, PHILADELPHIA, PA, US; 1995, ISHIDA SHUZO ET AL: "The effect of supplementing calcium soap of fatty acids prepared from linseed oil on n-3 fatty acid contents in the lipids from blood, organs and muscle of finishing pigs", XP002754340, Database accession no. PREV199698602947 * abstract * ----- | 1-14 | |
| X | DATABASE WPI Week 201467 Thomson Scientific, London, GB; AN 2014-S34745 XP002754341, & CN 103 918 936 A (ZHOU Y) 16 July 2014 (2014-07-16) * abstract * ----- | 1-14 | |
| X | DATABASE WPI Week 201050 Thomson Scientific, London, GB; AN 2010-J14914 XP002754342, & CN 101 731 479 A (UNIV NORTHEAST AGRIC) 16 June 2010 (2010-06-16) * abstract * ----- | 1-14 | TECHNICAL FIELDS SEARCHED (IPC) |
| X | DATABASE WPI Week 200722 Thomson Scientific, London, GB; AN 2007-213092 XP002754343, & JP 2007 006719 A (NICHIWA SANGYO KK) 18 January 2007 (2007-01-18) * abstract * ----- | 1-14 | |

The present search report has been drawn up for all claims

| Place of search | Date of completion of the search | Examiner |
|---|---|---|
| Munich | 16 February 2016 | Georgopoulos, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 17 2194

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2016

| Patent document cited in search report | | Publication date | Patent family member(s) | | Publication date |
|---|---|---|---|---|---|
| CN 103918936 | A | 16-07-2014 | NONE | | |
| CN 101731479 | A | 16-06-2010 | NONE | | |
| JP 2007006719 | A | 18-01-2007 | JP | 4762617 B2 | 31-08-2011 |
| | | | JP | 2007006719 A | 18-01-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101731473 A

- CN 103125769 A

**Non-patent literature cited in the description**

- *method XII,* 2003, vol. 10